# EUROPEAN PATENT APPLICATION

(11) **EP 2 711 838 A1**
(43) Date of publication of application: **26.03.2014**
(21) Application number: 12250153.9
(22) Date of filing: 25.09.2012
(51) Int. Cl.: G06F 9/455, G06F 17/22, G06F 9/50

(54) **Documentation parser**

(71) Applicant: British Telecommunications public limited company, London EC1A 7AJ (GB)
(72) Inventor: The designation of the inventor has not yet been filed
(74) Representative: Lidbetter, Timothy Guy Edwin

(57) **Abstract**

A documentation parser 20 identifies text in documentation (1) on computer processes and performs analysis (21-25) on the structure and content of the documentation to determine automatically how to invoke services. The system then compiles a process using the invoked services and runs tests (30) using the process to determine whether it functions as intended. This reduces the degree of human intervention (41) required to generate the complete program (50, 51).

## Description

The invention is related to the provision of services using an information distribution system running over an electronic data network, for example using the "World Wide Web" over the Internet, in which clients send requests to servers; servers process the requests and return appropriate responses. A Web Service can be considered to be a computational object on the Web.

The Web is traditionally concerned with serving static pages of text and other media for human consumption. However, more recently the Web approach has been used to deliver computational objects which can be requested from within computer code (or via a human interface), carry out some computation (for example using data contained in the request) and return a result. Increasingly organisations are making their data available by Web application programming intrerfaces (APIs). A simple example of a Web Service would be a weather service in which, when given a request including a location parameter, the Service will return data about the weather at the location. Data in the response is typically in the form of XML or JSON (JavaScript Object Notation).

Web Services might also have interfaces suited to human users e.g. a form interface where users can enter data as free text or by selecting items from a menu, and make a request to the website, which returns the results of the requests to the user terminal for output such as a visual display.. Such human interaction can be useful for testing a service invocation function prior to integration with other software.

The majority of early Web Services conformed to the WSDL (Web Service Description-Language) / SOAP (Simple Object Access Protocol) style, which is very prescriptive. WSDL allows a strict definition of the Web Service to be made in terms of available methods that can be invoked, and the data that should be provided in response to the invoked method. Similarly SOAP defines a protocol for the messages that are to be passed. The prescriptive nature of WSDL / SOAP allows the definitions to be interpreted by a computer, making it easy to construct wrappers around the service which can be exposed in a variety of ways depending upon the needs of the consumer of the Web Service. For example, a wrapper could be constructed to expose a Web Service as a Java Class making it easy to integrate the Web Service with a Java application.

More recently a trend for Web Services to adopt the Representational State Transfer ("ReST") protocol has emerged. This approach relies on the standard features of the HTTP (hypertext transport protocol) to simplify the coding process for the user.. It is much less prescriptive and does not use an equivalent of WDSL / SOAP to define the interaction. Instead documentation pages are written in plain text to describe the service to the human who can then create code to wrap the Service as appropriate. A format named WADL (Web Application Description Language) exists which replicates some of the features of WSDL for ReST services (i.e. description of available resources); however, this is not widely supported.

The present invention provides an automated analysis of a documentation page to establish how the service should be invoked. A number of possible techniques can be used to identify features in the documentation text, and thus to identify the set of routines which involve interaction with a further computing entity that the service accepts. This invention then generates a computational process including such routines. In preferred embodiments test service invocations are made to validate the analysis. Although largely automated, the invention may allow human intervention to perform modifications in order to **successfully allow a web-based service to be invoked.**

Maleshkova,- M., Pedrinaci, C., and Domingue, J. '*Semantically Annotating RESTful Services with SWEET' Demo at 8th International Semantic Web Conference, October 2009* describes a tool known as SWEET (Semantic Web sErvice Editing Tool). The tool provides a graphical user interface (GUI) that allows a user to manually create annotations on a web service documentation page using the ReST protocols. The user is able to highlight parts of the page and assign a type (e.g. input, output, method, operation, address) and a semantic annotation (e.g. a concept in a domain ontology) to it. Upon completion of this process the user can then create a Semantic Service description which can be uploaded to a public server. This description can then be used by other tools to understand how to invoke the web service and / or combine it with other services.. These references describe methods of identifying that a web page describes a Web Service of this type, but requires the user to perform the laborious process of parsing and interpreting the information contained within the page. This manually annotated documentation can then be automatically interpreted allowing the service to be invoked from within an application. The present invention automates the annotation process.

Steinmetz, N., Lausen, H. and Brunner, M. 'Web Service Search on Large Scale' (International Conference on Service Oriented Computing (ICSOC) 2009, November 24-17, 2009, Stockholm, Swed*en)* describes a web "crawler" that identifies web service descriptions on the web and indexes them such that a search engine can then return them as results to users. The crawler attempts to index service descriptions of both WSDL and ReST format. The crawler looks for features in the page content such as:
keywords on the page or in the URL such as "api", "developer", "lib", "code", "service", etc;
a high number of 'camelcase' words (character strings containing medial upper-case characters, such as ReST, apiKey, or parameterValue),
a high number of inner domain links,
or other characteristic character strings such as "://".

According to the invention, there is provided a method of generating a service invocation function, wherein documentation relating to the processes to be performed by the service invocation function is analysed, the textual content of the documentation is parsed, and computational routines required to perform the processes are identified and compiled into the service invocation function.

This automated process reduces the level of expertise required to make use of the service.

The parsing may include the identification of textual content in specified alphanumeric formats, such as specified character strings or formats, or the structure or layout of the textual content.

In a preferred embodiment the method includes a test process for the service invocation function so generated by the operation of a computer according to the service invocation function using predetermined test data, and analysis of the outcome of the operation. This allows the process to determine whether it has found a valid way to invoke the Service, or may initiate an interaction with the user to improve upon or correct the outcome of the automated process.

Once a valid service invocation function has been generated from the textual content it can be encoded with a computational wrapper allowing the Service to be invoked from an external program or application, in an analogous way to that done for WSDL descriptions, for example the Axis2 process for Eclipse.

The invention makes use of the fact that documentation for web services using the Representational State Transfer protocol typically uses a set of common characteristics. Although there is a significant variety in the quality and content of documentation, certain commonalities can be identified and extracted, and used to provide a service invocation function or "wrapper" allowing the service to be invoked. The following examples describe how invocations to such a Web Service can be made, using the application programme interface (api) of a fictional service XYZ provided by a service ABC.

A base URL (universal resource locator) provides an endpoint for the service e.g. https://www.ABCapis.com/XYZ/v1/.

Following specification of the base URL, the resource type is then usually given e.g. https://www.ABCapis.com/XYZ/v1/resources.

At this stage, invocations can then be made against the resource type, or a specific resource of the type can be referenced. In both cases a parameter can be added after a '?' character. Further parameters can be added separated by a '&' character. Parameters always follow the format: parameterName=parameterValue. Thus an invocation against all resources using the search parameter q would be: https://www.ABCapis.com/XYZ/v1/resources?q=search+terms

An invocation to retrieve a specific resource would be: https://www.ABCapis.com/XYZ/v1/resources/myresource/ . Items related to specific resources can also be referred to. For example the following retrieves a specific resource res1 from a set of resources belonging to a specific user: https://www.ABCapis.com/XYZ/v1/users/userld/resources/res1.

Several different methods can be applied to the invocations. The most common are:
GET which requests an existing resource,
POST which creates a new resource,
PUT which updates an existing resource and
DELETE which deletes an existing resource.

PUT and POST methods typically include a message body where the data /resource to be added or modified is described. A message body is part of an HTTP request.

The following characteristics are typically found in ReST WS documentation. The HTML structure of the page and in particular the structure of the headings provides an important indication about the different invocations that can be made for the service. The headings themselves will typically reference the resources that can be accessed.

The pages will generally contain http or https URLs written as text, which are almost always service invocations (they may be templates for invocations, or example invocations) including the resources that can be accessed and the parameters that can be used. Invocations are accompanied by a mention of the http method that should be used i.e. GET, POST, PUT or DELETE and these are generally written in uppercase.

Invocations are usually accompanied by the allowable parameters that can be used with the invocation. These are often generally described as 'parameter', 'arguments' or 'attributes'.

The text surrounding the invocations provides detailed information about what the invoked service does and what resources it provides access to.

URLs and parameters are often written using preformatted text using the <pre> html tag. Text in an element is displayed in a fixed-width font (usually Courier).

Parameters are usually presented in an HTML table or list or some other repeated format. A description of what the parameter does is presented next to the parameter name.

Sample responses to invocations are often provided, again using tags. These are generally encoded as JSON (Javascript Object Notation) or XML.

Sample message bodies for invocations are often provided, again using tags and also generally encoded as JSON (Javascript Object Notation) or XML.

Based on these characteristics various techniques can be applied to analyse and extract information about how to invoke the service. An embodiment of this process will now be described with reference to the drawings, in which:
Figure 1 is a flow chart showing the principal elements of the process, and

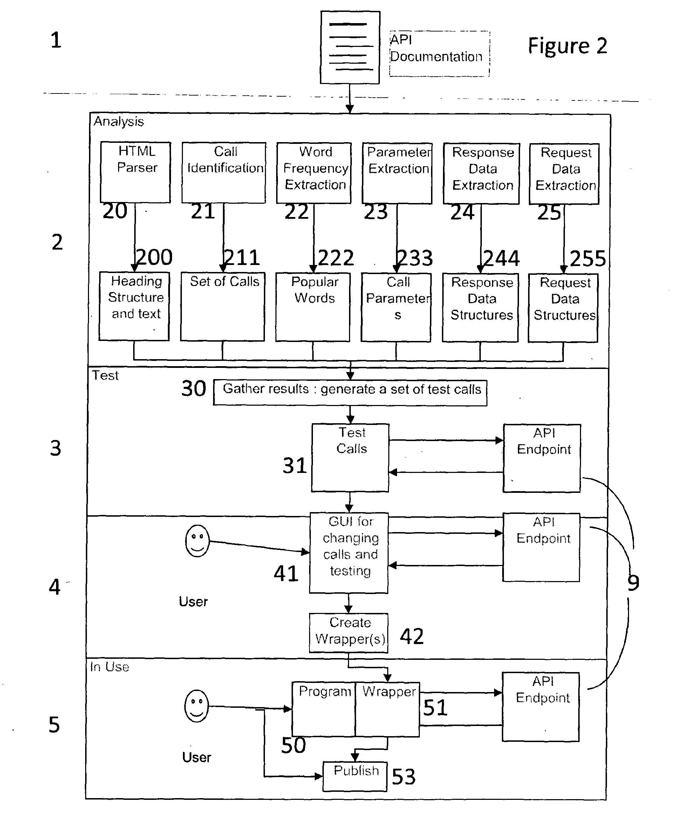

Figure 2 depicts some of these elements in greater detail

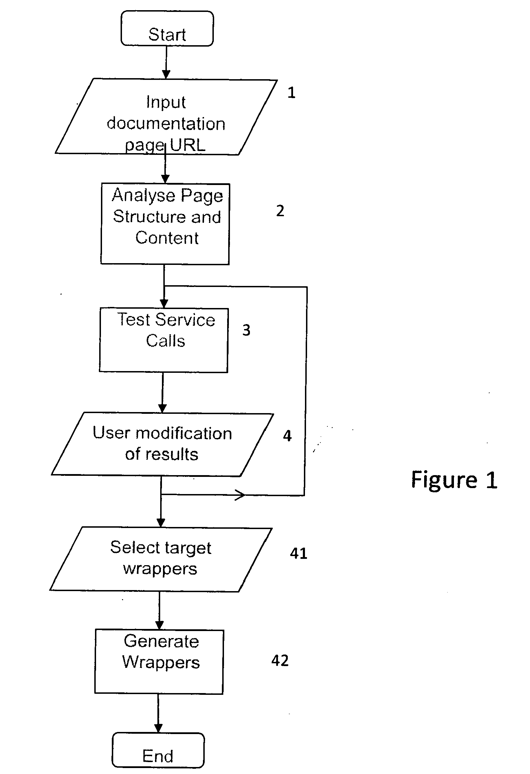

Referring to Figure 1, the process is initiated by inputting the url for the documentation into the system. (Step 1). The process then runs an analysis of the page structure and content of the documentation (step 2). This analysis comprises several inter-dependant elements 20-25, generating respective outputs 200-255.

The first element is an HTML parser 20, for example jsoup (www.jsoup.org) which parses the HTML (HyperText Markup Language) of the documentation page to identify a hierarchical structure 200. This hierarchy is not the same as that formed by the various levels of headings that are found on a page, but on the HTML tags and their contents. The parsed HTML can be recursively searched in order to locate headings and their sub-headings and the textual content provided under each heading. jsoup provides methods to obtain tags of a certain type.

For example, the arrangement of headings 200 may be represented in a tree data structure.

Following this, the text under each of the headings 200 is searched for occurrences of textual URLs. (step 21) This is carried out using a regular expression which assumes that the URL will start with 'http://' or 'https://' followed by a set of characters (not including a '?' character - if the URL has parameters, these are found in the next step 22). For each invocation found, it is stored in a set of invocation data 211, related to the heading under which it was found.

Any parameter names are then found (step 23) by using a regular expression to locate anything between '?' or '&' and '='. The values given for these are also stored by extracting anything after a '='. Parameter names and values are stored (233).with the invocation (211) after which they were found

The next step is to identify the HTML method associated with the invoked service. The text under the heading under which the invocation is located is searched for the occurrence of one of the methods, first in uppercase and if not successful in lower or title case. The method found (or if more than one is found, the one mentioned most often and / or first) is also stored 233 along with the invocation data 211.

Following, this the parsed HTML 200 is searched for a table or repeating construct such as a list which provides the parameters that can be used with the service invocations. These are often provided under a heading containing a form of the word 'parameter', or failing that 'argument' or 'attribute'. The text under this heading can then be searched for the occurrence of a HTML table tab. Within this there is typically a table heading or first row which contains the column names of the table, one of which typically contains the 'parameter' keyword. The table elements arranged under this column will provide the names of the parameters. The other columns will typically provide text describing what the parameter does or represents and where it can be used. This can also be stored 233 with the parameter as supporting text.

If a table is not found, other HTML tags such as "list" can be searched for. Another technique is to search for the names of parameters already found alongside invocations, and locate where they are subsequently described. Once found the preceding html tags and or characters e.g. a <span> tag can be used to locate other parameters assuming that some unknown repeating structure is used to display the list of parameters.

A further technique is to use the word frequency in the documentation (step 22), and in particular the headings, to determine the most important features i.e. the resources that the service represents. A word frequency counter can be used to identify the words that are used the most in the documentation. The results of this test can be used in conjunction with a stop list to filter out the most common everyday words as well as the allowable set of html tags. The data thus collected 222 can be used on the headings and text under them. This approach typically identifies the resources of the API followed by the names of parameters and can be used to unpick the resources from the API invocations that have already been found and to reinforce the identification of parameters 233.

Sample responses to invocations are often provided and typically follow closely after a invocation in the documentation and often under the same heading or a subsequent heading at the same level. These are generally JSON or XML and are displayed in a fixed width font. Since both JSON and XML provide a parsable structure, these can therefore be identified by a response data extraction function 24, and a data structure in the target language can be automatically constructed which represents the response and can be used to store it 244, allowing it to be used in the target application. In a similar way, a data structure 25 can be created to represent a request message body 255 for invocations using PUT and POST methods.

The end result of the analysis 2 is a set of data 200-255 which represents the API as described in the documentation. Since the quality and content of the documentation varies this will affect the quality of the results of the analysis. A set of confidence values can be attributed to the data that is discovered. This indicates the level of evidence found which supports the invention in creating a set of valid API invocations.

This data 200-255 from the analysis 2 can be used to create invocations to the API.

The next stage (step 3) of the process is to test the data 200-255 that has been collected, by carrying out some test invocations using it. Since GET invocations have no side effects i.e. will not add, change or remove resources, test invocations using this method will not have any side effects. If it is necessary to test methods which do have side effects, a sequence of test invocations can be run which have a zero overall effect. For example, a "POST" invocation can be tested by using it to create a resource. The same resource can then be deleted using the "DELETE" invocation. Alternatively, a "DELETE" invocation can be tested by first creating a test resource (using "POST") to be deleted. A "PUT" function can be tested by first using "GET" to obtain the current value of a resource, then using "PUT" twice, first to change that value to a test value and then to restore it to the original value previously obtained by the "GET" function..

Test invocations 31 can be carried out automatically using values for resources or parameters found in the documentation or by allowing the user to provide suitable test values. The invocations are transmitted to the application process interface endpoint 9 and responses evaluated to determine whether the invocations succeed and to analyse any data that is returned. Where different values for the same invocation are provided in the documentation, a number of tests using different combinations of values can be carried out and the results analysed to identify which ones succeed. If successful invocations are found to have been made this increases the confidence that the data discovered about the API is correct and would satisfy a user and the stored confidence values can be increased to represent this.

The next phase of the process (step 4) allows the user to modify the service invocations. A representation of the API is delivered to a graphical user interface (GUI) 40 with a user input allowing changes to be made, to provide input values, to further test the invocations and check that the output is stored correctly. A form-style interface can be used to allow the user to provide input values. The user is also able to add, remove or change the names of parameters and resources that can be made with a invocation, and to add, change or remove invocations themselves. The data structures created to represent message bodies and responses may also be provided to the user. As shown in Figure 3, the changes implemented by the user are themselves tested (step 3) at the API end point 9 and the testing and modification steps (31, 40) can be iterated until the user is satisfied

The user then initiates the final phase of the process by selecting an API wrapper for a chosen target programming language (step 41) which is used to create a set of classes (51) containing appropriate methods and attributes to allow the API 9 to be invoked from an application 50 written in the target language.

The user may also make these functions (wrappers) available to others (step 53) by allowing them to be stored in an online repository accessible to other users.

## Claims

1. A method of generating a service invocation function, wherein documentation relating to the processes to be performed by the service invocation function is analysed, the textual content of the documentation is parsed, and computational routines required to perform the processes are identified and compiled into the service invocation function, the processes including the invocation of routines.

2. A method according to claim 1, wherein the parsing includes the identification of textual content in specified alphanumeric formats.

3. A method according to claim 2, wherein the parsing identifies predetermined character strings or formats,

4. A method according to Claim 2 or Claim 3, wherein the parsing identifies predetermined structures or layouts of the textual content.

5. A method according to any preceding claim, further comprising a test process for the service invocation function so generated, the test process causing the operation of an application programming interface on commands from the service invocation function using predetermined test data, and analysis of the outcome of the operation.

6. A method according to Claim 5, wherein the test process initiates an interaction with a user to modify the service invocation function.

7. A method according to any preceding claim, further comprising the step of encoding the resulting service invocation function with a computational wrapper allowing a computational object to be invoked from an external program or application
